# EUROPEAN PATENT SPECIFICATION

(11) **EP 0 577 986 B1**
(45) Date of publication and mention of the grant of the patent: **15.09.1999**
(21) Application number: 93109132.6
(22) Date of filing: 07.06.1993
(51) Int. Cl.: B25J 9/16

(54) **Automatic pickup method and unit for cylindrical objects**
Verfahren und Vorrichtung zum automatischen Einsammeln von zylindrischen Objekten
Méthode et dispositif de ramassage automatique d'objets cylindriques

(30) Priority: 12.06.1992 IT BO920236
(43) Date of publication of application: 12.01.1994
(73) Proprietor: G.D SOCIETA' PER AZIONI, I-40133 Bologna (IT)
(72) Inventor: Neri, Armando, I-40100 Bologna (IT); Chini, Stefano, I-40068 San Lazzaro Di Savena (IT); Stivani, Eros, I-40100 Bologna (IT)
(74) Representative: Jorio, Paolo, Dr. Ing.

(56) References cited:
- WO-A-91/20020
- DE-C- 3 420 330
- US-A- 4 281 385
- US-A- 4 563 824
- US-A- 4 723 884
- PATENT ABSTRACTS OF JAPAN vol. 10, no. 0305 (P-0507) 17 October 1986 & JP-A-61 120 005 (FUJI ELECTRIC CO. LTD.) 7 June 1986

## Description

The present invention relates to an automatic pickup method for cylindrical objects.

The present invention may be employed to advantage in the cigarette manufacturing industry, to which the following description refers purely by way of example, and especially for automatically feeding reels of paper or other wrapping material to cigarette manufacturing and/or packing machines.

In the cigarette manufacturing industry, robot-fitted trucks are employed travelling along predetermined paths between a storage facility for reels of wrapping material and individual user machines on production and packing lines.

As described in EP-P-0 551 854, each robot truck normally comprises supporting beds for a number of reels of different materials arranged in stacks, and a pickup unit comprising an articulated loading arm, the free end of which is fitted with a pickup head for selectively engaging and retaining the reels, usually by means of suction.

Due to the widely differing inside and/or outside diameters of the reels used in the cigarette industry, the pickup head normally includes an annular front suction member, the outside and inside diameters of which are respectively equal to the minimum outside diameter and maximum inside diameter of the reels to be picked up. Obviously, for the pickup head to effectively engage the reel, the annular suction member must be positioned perfectly coaxial with the reel, the coordinates of which on the supporting bed are normally known only roughly and are invariably inaccurate. Robot trucks of the aforementioned type are therefore necessarily fitted with a detection system for accurately locating the reel to be picked up.

US-A-4 732 884 discloses a reel pickup apparatus,in which the pickup head is provided with a number of pairs of sensors which are to be manually adjusted in position depending on the diameter of the reels to be picked up, and which allow location of the central axis of the reels by a trial-and-error procedure, which is very complicated and time consuming. Moreover, this known pickup apparatus is absolutely unsuitable for use in combination with the robot truck mentioned above, since, as already mentioned, such robot truck is used for transporting several types of reel of different diameters which would require a continuous manual adjustment of the positions of the sensors.

According to a much better and faster procedure described in EP-P-0 551 854, the reel is picked up by first detecting its position by means of a telecamera, which films at least part of the reel, and transmits the image produced to a processing unit whereby the axis of the reel is located accurately on the basis of information deduced from the image.

Though extremely efficient and accurate, the above method presents several drawbacks as a result of the telecamera, which, together with the closed-circuit processing system connected to it, is relatively expensive. In addition, the telecamera, which is normally fitted inside the pickup head, must be maintained at least 30 centimetres from the reel being filmed, thus limiting the height of the stack of reels, and consequently the number of reels loadable on to the truck, for a given length of the articulated arm supporting the telecamera.

It is an object of the present invention to provide a pickup method designed to overcome the aforementioned drawbacks.

According to the present invention, there is provided an automatic pickup method for cylindrical objects, particularly reels with a tubular central core; each said object having a central axis and a cylindrical outer surface, and being engaged by a self-propelled pickup head; the method being characterized by comprising moving said head over said object in such a manner as to individuate, via sensor means on the head, the coordinates of at least two distinct points on said outer surface; mathematically processing said coordinates to determine the location of said central axis; moving the pickup head into a position coaxial with said central axis; and bringing the pickup head into engagement with said object.

The present invention also relates to an automatic pickup unit for cylindrical objects.

According to the present invention, there is provided an automatic pickup unit for cylindrical objects, particularly reels with a tubular central core; each said object having a central axis determined by first coordinates, and a cylindrical outer surface; and the pickup unit comprising a pickup head, first activating means for moving said head both transversely and parallel to said central axis, control means for controlling said first activating means; and sensor means on said head, for determining second coordinates of points on said outer surface, characterized by the fact that said control means comprise a mathematical processor, and said sensor means are designed for determining said second coordinates of at least two distinct points; means being provided for transmitting said second coordinates of said two distinct points to said processor, which provides for mathematically determining said first coordinates on the basis of the second coordinates of said two distinct points, and for so controlling said activating means as to move said head into engagement with and into a position coaxial with said object.

The present invention will now be described by way of example with reference to the accompanying drawings, in which:
Fig.1 shows a view in perspective of a vehicle featuring the pickup unit according to the present invention;
Fig.2 shows a larger-scale section of a detail on the Fig.1 unit;
Fig.3 shows an operating diagram, viewed from above, of the Fig.2 unit.

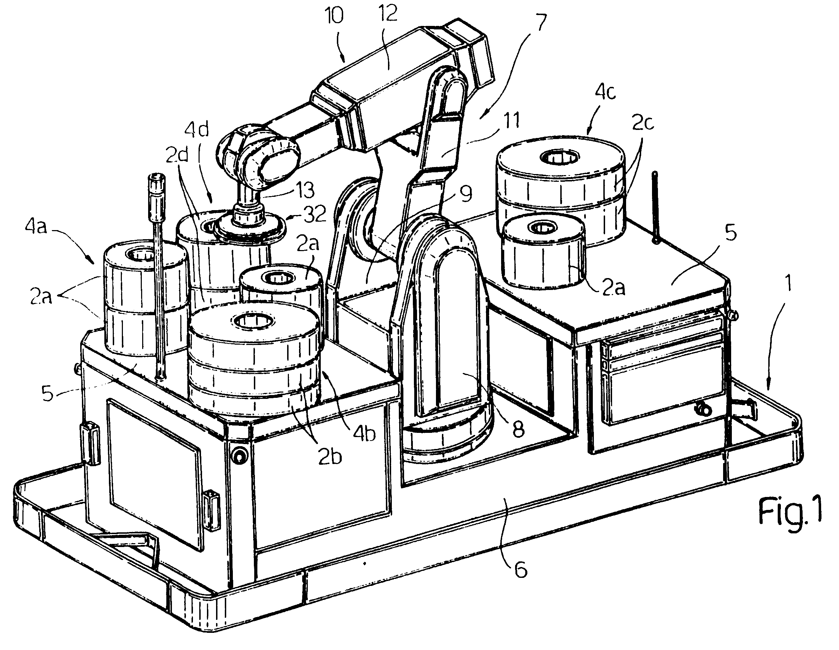

Numeral 1 in Fig.1 indicates a self-propelled truck featuring, in known manner not shown, a control unit (not shown) dialoguing by radio with a plant supervisor. Truck 1 provides specifically for picking up from a storage facility (not shown) a number of reels 2 (indicated 2a, 2b, 2c, 2d in the example shown), each having a tubular axial core 3 (Fig.s 2 and 3); arranging reels 2 horizontally in respective neat stacks 4 (indicated 4a, 4b, 4c, 4d in the example shown) on supporting beds 5 of truck 1; and selectively transferring them to respective loading devices (not shown) of a number of machines (not shown) forming part of a cigarette manufacturing and packing plant (not shown).

In the example shown, truck 1 presents two supporting beds 5 in turn supported on platform 6 of truck 1, on either side of a robot pickup unit 7. Unit 7 comprises a powered base 8 mounted on platform 6 so as to rotate about a vertical axis, and fitted on top with a horizontal-axis fork 9 and an articulated arm 10 connected to fork 9 and comprising a first, second and third portion, 11, 12, 13, hinged to one another and to fork 9 and all powered in known manner so as to rotate in relation to one another about respective horizontal axes.

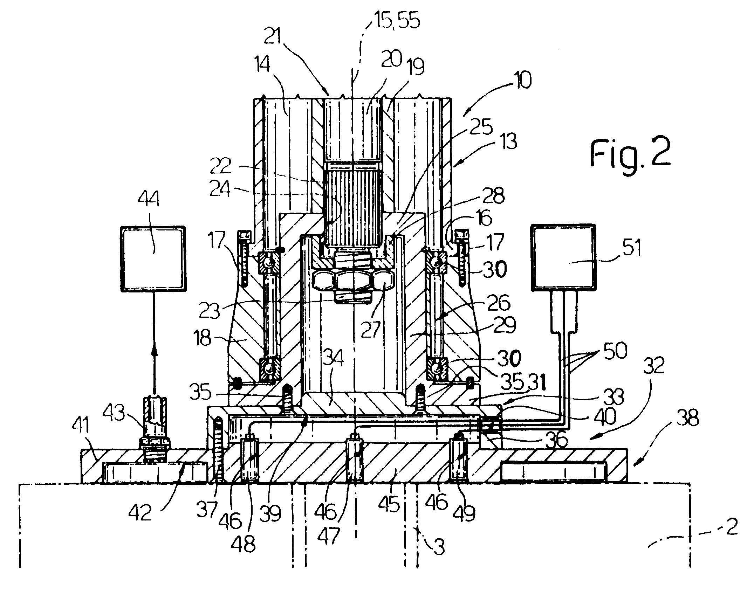

As shown in Fig. 2, portion 13 is defined by a pipe 14 having an axis 15, and the free end of which presents a flange 16 for connecting, by means of screws 17, a sleeve 18 coaxial with pipe 14. Pipe 14 houses a second pipe 19 coaxial with and fixed in relation to pipe 14, and in turn housing in rotary manner the output shaft 20 of a known actuator 21 fitted inside portion 13 and which provides for rotating shaft 20 about axis 15. Close to its free end, shaft 20 presents a splined portion 22 from which a threaded end portion 23 extends axially. Portion 22 projects partially from the free end of pipe 19, and extends through a knurled hole 24 formed centrally through the end wall 25 of a bell 26 coaxial with axis 15 and fitted with wall 25 contacting the end of pipe 19 by means of a nut 27 and tubular spacer 28 fitted on to threaded portion 23.

Bell 26 comprises a cylindrical lateral wall 29 extending inside sleeve 18, mating with the inner surface of sleeve 18 via the interposition of two bearings 30, and having an annular outer flange 31 extending outwards of the annular end surface of sleeve 18.

Bell 26 forms part of a pickup head 32 movable selectively, with portion 13, over beds 5 and the top of stacks 4.

As shown in Fig.2, in addition to bell 26, head 32 also comprises a cup-shaped body 33 coaxial with and having its concavity facing the same way as bell 26. Body 33 comprises an end wall 34 connected to flange 31 by screws 35, so as to close bell 26; and a cylindrical lateral wall 36, the free edge of which is connected by screws 37 to a central portion of a circular plate 38 coaxial with body 33 and defining, with body 33, a cylindrical chamber 39 communicating externally via a hole 40 formed through wall 36.

Plate 38 forms part of head 32, and presents a peripheral, circular ring-shaped portion 41 projecting outwards in relation to body 33, and having, on the opposite side to that connected to body 33, a front annular groove 42 communicating via a conduit 43 with a known suction device 44.

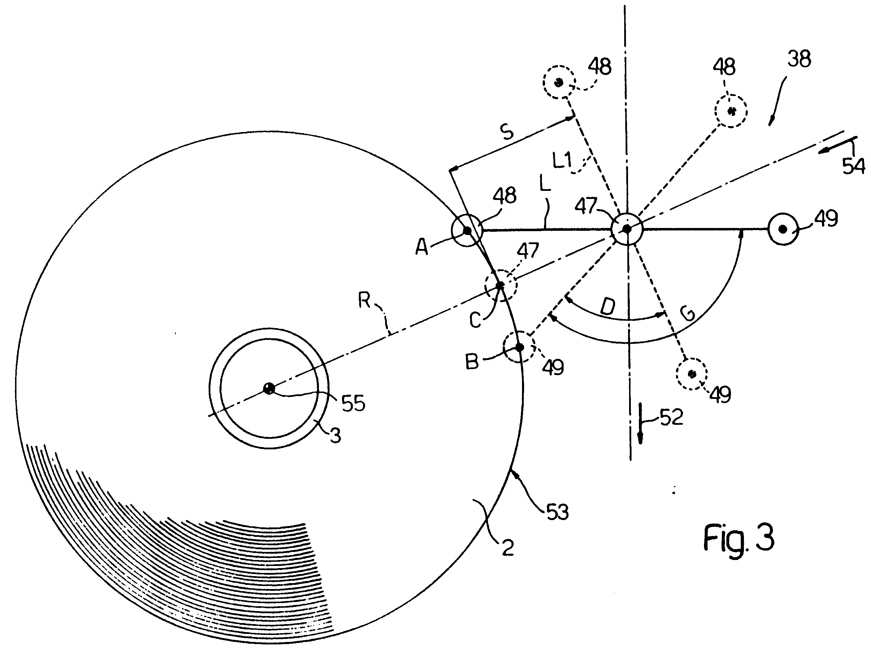

A central portion 45 of plate 38 presents three through holes 46 engaged by respective photosensors 47, 48 and 49 aligned along line L, and of which photosensor 47 is located between and an equal distance from the other two. Photosensors 47, 48 and 49 are connected by lines 50 to a processor 51 programmed in known manner to perform a given number of operations as described below with reference to Fig.3.

In actual use, a reel 2 is picked up off the top of a respective stack 4 located at any point on respective bed 5 as follows.

Processor 51, which knows the approximate position of said stack 4, activates articulated arm 10 so as to position plate 38 of head 32 slightly above the level of reel 2, and then move plate 38, transversely in relation to axis 15 and in direction 52, towards the position presumably occupied by reel 2, and until one of photosensors 48, 49, e.g. sensor 48, intercepts lateral surface 53 of reel 2 at point A. Processor 51 then arrests head 32 and, via actuator 21, rotates it about axis 15 so as to move photosensor 48 away from point A and cause photosensor 49 to intercept surface 53 at a second point B and subsequent to rotating head 32 by angle G about axis 15.

Via actuator 21, processor 51 then rotates head 32 in the opposite direction about axis 15 and by an angle D equal to half of angle G, so as to bring line L into position L1 parallel to a line (not shown) tangent to surface 53 at a point halfway between points A and B. Processor 51 then moves head 32 by distance S in a horizontal direction 54 perpendicular to line L1, until sensor 47 intercepts surface 53 at point C between and an equal distance from points A and B, and located on radius R parallel to direction 54.

The coordinates of points A, B and C enable processor 51 to compute the coordinates of axis 55 of selected reel 2, and to move head 32 in direction 54 and into the pickup position shown in Fig.2, wherein parallel axes 15 and 55 coincide. At this point, suction device 44 is activated, and head 32 engages reel 2 and lifts it off respective stack 4.

Three relatively cheap photosensors thus provide for accurate, relatively straightforward, high-speed location of axis 55 of selected reel 2, using a relatively straightforward processor, with no need for an image processing unit, no need for a much more expensive telecamera, and, above all, with no need to position head 32 a given distance above reel 2 to enable this to be filmed by the telecamera.

According to a variation not shown, sensors 47, 48 and 49 are replaced by a single sensor mounted on a slide and moved by an actuator over plate 38 and along line L, so as to successively assume the three positions of sensors 48, 49 and 47.

According to a simplified embodiment of the present invention, if the diameter of reels 2 is known to a sufficient degree of accuracy, the location of the reel axis may be determined as described, but using only two of sensors 47, 48 and 49.

## Claims

1. An automatic pickup method for cylindrical objects, particularly reels (2) with a tubular central core (3); each said object (2) having a central axis (55) and a cylindrical outer surface (53), and being engaged by a self-propelled pickup head (32); the method being characterized by comprising moving said head (32) over said object (2) in such a manner as to individuate, via sensor means (47, 48, 49) on the head (32), the coordinates of at least two distinct points (A, B, C) on said outer surface (53); mathematically processing said coordinates to determine the location of said central axis (55); moving the pickup head (32) into a position coaxial with said central axis (55); and bringing the pickup head (32) into engagement with said object (2).

2. A method as claimed in Claim 1, characterized by the fact that said points (A, B, C) are three in number; said head (32) having a longitudinal axis (15) parallel to said central axis (55); and the coordinates of said three points (A, B, C) being determined by said sensor means (47, 48, 49) located in three distinct positions, one of which is a central position on said longitudinal axis (15), and the other two of which are lateral positions aligned with each other and with the central position along a line (L) perpendicular to said longitudinal axis (15), and symmetrical in relation to the central position.

3. A method as claimed in Claim 2, characterized by the fact that the coordinates of said three points (A, B, C) are determined by moving the head (32), set to a first angular position about said longitudinal axis (15), transversely in relation to said longitudinal axis (15) and until the coordinates of a first said point (A) are determined by a first said sensor means (48) located in a first of said lateral positions; by rotating the head (32) by a first given angle (G) about said longitudinal axis (15) and into a second angular position wherein the coordinates of a second said point (B) are determined by a second said sensor means (49) located in a second of said lateral positions; by rotating the head (32) in the opposite direction about said longitudinal axis (15) and by a second angle (D) equal to half said first angle (G), so as to set the head (32) to an intermediate angular position in relation to said first and second angular positions; and by moving the head (32) transversely in a forward direction (54) perpendicular to said line (L) in said intermediate angular position, and until the coordinates of a third said point (C) are determined by a third said sensor means (57) located in said central position.

4. A method as claimed in Claim 3, characterized by the fact that said position coaxial with said central axis (55) is reached by moving said head (32) further in said forward direction (54).

5. An automatic pickup unit for cylindrical objects, particularly reels (2) with a tubular central core (3); each said object (2) having a central axis (55) determined by first coordinates, and a cylindrical outer surface (53); and the pickup unit (7) comprising a pickup head (32), first activating means (10) for moving said head (32) both transversely and parallel to said central axis (55), control means (51) for controlling said first activating means (10); and sensor means (47, 48, 49) on said head (32), for determining second coordinates of points (A, B, C) on said outer surface (53), characterized by the fact that said control means (51) comprise a mathematical processor (51), and said sensor means (47, 48, 49) are designed for determining said second coordinates of at least two distinct points (A, B, C); means (50) being provided for transmitting said second coordinates of said two distinct points to said processor (51), which provides for mathematically determining said first coordinates on the basis of the second coordinates of said two distinct points, and for so controlling said activating means (10) as to move said head (32) into engagement with and into a position coaxial with said object (2).

6. A unit as claimed in Claim 5, characterized by the fact that said activating means (10) comprise actuating means (21) for rotating said head (32) about its longitudinal axis (15) parallel to said central axis (55).

7. A unit as claimed in Claim 6, characterized by the fact that said points (A, B, C) are three in number; said sensor means (47, 48, 49) comprising three sensors (47, 48, 49) located on said head and in three respective positions, one of which is a central position on said longitudinal axis (15), and the other two of which are lateral positions aligned with each other and with the central position along a line (L) perpendicular to said longitudinal axis (15), and symmetrical in relation to the central position.

8. A unit as claimed in Claim 7, characterized by the fact that said sensors (47, 48, 49) are photosensors.

## Patentansprüche

1. Automatisches Aufnahmeverfahren für zylindrische Gegenstände insbesondere Rollen (2) mit einem rohrförmigen mittleren Kern (3), wobei jeder Gegenstand (2) eine mittlere Achse (55) und eine zylindrische Außenfläche (53) hat und von einem selbstangetriebenen Aufnahmekopf (32) erfaßt wird, welches Verfahren dadurch gekennzeichnet ist, daß es das Bewegen des Kopfes (32) über dem Gegenstand (2) in einer derartigen Weise, daß über Sensoreinrichtungen (47, 48, 49) am Kopf (32) die Koordinaten von wenigstens zwei getrennten Punkten (A, B, C) an der besagten Außenfläche (53) einzeln erfaßt werden, das mathematische Verarbeiten der Koordinaten zur Bestimmung der Position der mittleren Achse (55), das Bewegen des Aufnahmekopfes (32) in eine Positon koaxial zur mittleren Achse (55) und das Bringen des Aufnahmekopfes (32) in eine Ineingriffnahme mit dem Gegenstand (2) umfaßt.

2. Verfahren nach Anspruch 1 dadurch gekennzeichnet, daß die Punkte (A, B, C) in ihrer Anzahl gleich drei sind, der Kopf (32) eine Längsachse (15) parallel zur mittleren Achse (55) hat und die Koordinaten der drei Punkte (A, B, C) durch die Sensoreinrichtung (47, 48, 49) bestimmt werden, die sich an drei getrennten Positionen befinden, von denen eine die mittlere Position auf der Längsachse (15) ist und die beiden anderen seitliche Positionen sind, die zueinander und zur mittleren Position längs einer Linie (L) senkrecht zur Längsachse (15) ausgerichtet und bezüglich der mittleren Position symmetrisch sind.

3. Verfahren nach Anspruch 2, dadurch gekennzeichnet, daß die Koordinaten der drei Punkte (A, B, C) dadurch bestimmt werden, daß der Kopf (32), der in eine erste Winkelposition um die besagte Längsachse (15) gesetzt ist, quer bezüglich der Längsachse (15) bewegt wird, bis die Koordinaten eines ersten Punktes (A) durch eine erste Sensoreinrichtung (48) bestimmt werden, die sich in einer ersten der seitlichen Positionen befindet, der Kopf (32) um einen ersten gegebenen Winkel (G) um die Längsachse (15) und in eine zweite Winkelposition bewegt wird, in der die Koordinaten eines zweiten Punktes (B) durch eine zweite Sensoreinrichtung (49) bestimmt werden, die sich in einer zweiten seitlichen Positionen befindet, der Kopf (32) in die entgegengesetzte Richtung um die Längsachse (15) und um einen zweiten Winkel (D) gedreht wird, der gleich der Hälfte des ersten Winkels (G) ist, um den Kopf (32) in eine Zwischenwinkelposition bezüglich der ersten und der zweiten Winkelposition zu bringen und der Kopf (32) quer in Vorwärtsrichtung (54) senkrecht zur Linie (L) in die Zwischenwinkelposition bewegt wird, bis die Koordinaten eines dritten Punktes (C) durch eine dritte Sensoreinrichtung (57) bestimmt werden, die sich in der mittleren Position befindet.

4. Verfahren nach Anspruch 3, dadurch gekennzeichnet, daß die Position koaxial zur mittleren Achse (55) dadurch erreicht wird, daß der Kopf (32) weiter in die Vorwärtsrichtung (54) bewegt wird.

5. Automatische Aufnahmeeinheit für zylindrische Gegenstände insbesondere Rollen (2) mit einem rohrförmigen mittleren Kern (3), wobei jeder Gegenstand (2) eine mittlere Achse (55), die durch erste Koordinaten bestimmt ist, und eine zylindrische Außenfläche (53) aufweist, welche Aufnahmeeinheit (7) einen Aufnahmekopf (32), eine erste Aktivierungseinrichtung (10) zum Bewegen des Kopfes (32) sowohl quer als auch parallel zur mittleren Achse (55), eine Steuereinrichtung (51) zum Steueren der ersten Aktivierungseinrichtung (10) und Sensoreinrichtung (47, 48, 49) am Kopf (32) umfaßt, um zweite Koordinaten von Punkten (A, B, C) auf der Außenfläche zu bestimmen, dadurch gekennzeichnet, daß die Steuereinrichtung (51) einen mathematischen Prozessor (51) umfaßt und die Sensoreinrichtungen (47, 48, 49) so ausgebildet sind, daß sie die zweiten Koordinaten von wenigstens zwei getrennten Punkten (A, B, C) bestimmen, Einrichtungen (50) zum Übertragen der zweiten Koordinaten der beiden getrennten Punkte auf den Prozessor (51) vorgesehen sind, der für eine mathematische Bestimmung der ersten Koordinaten auf der Grundlage der zweiten Koordinaten der beiden getrennten Punkte und dadurch für eine Steuerung der Aktivierungseinrichtung (10) derart sorgt, daß der Kopf (32) in eine Ineingriffnahme mit und in eine Position koaxial zu dem Gegenstand (2) bewegt wird.

6. Einheit nach Anspruch 5, dadurch gekennzeichnet, daß die Aktivierungseinrichtung (10) eine Aktivierungseinrichtung (21) umfaßt, die den Kopf (32) um seine Längsachse (15) parallel zur mittleren Achse (55) dreht.

7. Einheit nach Anspruch 6, dadurch gekennzeichnet, daß die Punkte (A, B, C) in ihrer Anzahl gleich drei sind, die Sensoreinrichtungen (47, 48, 49) drei Sensoren (47, 48, 49) umfassen, die am Kopf und in drei jeweiligen Positionen angeordnet sind, von denen eine eine mittlere Position auf der Längsachse (15) ist und die beiden anderen seitliche Positionen sind, die zueinander und zur mittleren Position längs einer Linie (L) senkrecht zur Längsachse (15) in einer Linie ausgerichtet und symmetrisch bezüglich der mittleren Position angeordnet sind.

8. Einheit nach Anspruch 7, dadurch gekennzeichnet, daß die Sensoren (47, 48, 49) Photosensoren sind.

## Revendications

1. Un procédé de ramassage automatique d'objets cylindriques en particulier de bobines (2) ayant un noyau central tubulaire (3) ; chaque dit objet (2) ayant un axe central (55) et une surface extérieure cylindrique (53) et recevant l'engagement d'une tête de ramassage (32) autopropulsée ; le procédé étant caractérisé par le fait de comprendre le déplacement de ladite tête (32) sur ledit objet (2) de manière à individualiser, via des moyens capteurs (47, 48, 49) placés sur la tête (32), les coordonnées d'au moins deux points distincts (A, B, c) sur ladite surface extérieure (53) ; le traitement mathématique desdites coordonnées pour déterminer l'emplacement dudit axe central (55) ; le déplacement de la tête de ramassage (32) vers une position coaxiale audit axe central (55) ; et l'amenée de la tête de ramassage (32) à l'engagement sur ledit objet (2).

2. Un procédé selon la revendication 1, caractérisé par le fait que lesdits points (A, B, C) sont au nombre de trois ; ladite tête (32) ayant un axe longitudinal (15) parallèle audit axe central (55) ; et les coordonnées desdits trois points (A, B, C) étant déterminées par lesdits moyens capteurs (47, 48, 49) placés dans trois positions distinctes, l'une d'entre elles étant une position centrale sur ledit axe longitudinal (15) et les deux autres étant des positions latérales alignées entre elles et avec la position centrale le long d'une ligne (L) perpendiculaire audit axe longitudinal (15), et symétriquement par rapport à la position centrale.

3. Un procédé selon la revendication 2, caractérisé par le fait que les coordonnées desdits trois points (A, B, C) sont déterminées par le déplacement de la tête (32) placée dans une première position angulaire autour dudit axe longitudinal (15), transversalement par rapport audit axe longitudinal (15) et jusqu'à ce que les coordonnées du premier des points (A) soient déterminées par lesdits premiers moyens capteurs (48) placés dans une première desdites positions latérales ; l'entraînement en rotation de la tête (32) selon un premier angle donné (G) autour dudit axe longitudinal (15) et vers une deuxième position angulaire, dans laquelle les coordonnées du deuxième des points (B) sont déterminées par lesdits deuxièmes moyens capteurs (49) placés dans une deuxième desdites positions latérales ; l'entraînement en rotation de la tête (32) dans le sens opposé autour dudit axe longitudinal (15) et selon un deuxième angle (D) égal à la moitié dudit premier angle (G), de manière à placer la tête (32) dans une position angulaire intermédiaire auxdites première et deuxième positions angulaires ; et le déplacement de la tête (32) transversalement dans une direction (54) orientée vers l'avant, perpendiculaire à ladite ligne (L) dans ladite position angulaire intermédiaire et jusqu'à ce que les coordonnées dudit troisième point (C) soient déterminées par lesdits troisièmes moyens capteurs (57) placés dans ladite position centrale.

4. Un procédé selon la revendication 3, caractérisé par le fait que ladite position coaxiale par rapport audit axe central (55) est atteinte par le déplacement de la disquette (32) plus loin dans la direction (54) orientée vers l'avant.

5. Une unité de ramassage automatique d'objets cylindriques, en particulier de bobines (2) ayant un noyau central tubulaire (3) ; chaque dit objet (2) ayant un axe central (55) déterminé par des premières coordonnées, et une surface extérieure cylindrique (53) ; et l'unité de ramassage (7) comprenant une tête de ramassage (32) ; des premiers moyens d'actionnement (10) pour déplacer ladite tête (32) à la fois transversalement et parallèlement audit axe central (55) ; des moyens de commande (51) pour commander lesdits premières moyens d'activation (10) ; et des moyens capteurs (47, 48, 49) placés sur ladite tête (32) pour déterminer des deuxièmes coordonnées des points (A, B, C) sur ladite surface extérieure (53), caractérisée par le fait que lesdits moyens de commande (51) comprennent un processeur mathématique (51), et lesdits moyens capteurs (47, 48, 49) sont conçus pour déterminer lesdites deuxièmes coordonnées d'au moins deux points distincts (A, B, C) ; des moyens (50) étant prévus pour transmettre lesdites deuxièmes coordonnées desdits deux points distincts audit processeur (51) qui permet de déterminer mathématiquement lesdites premières coordonnées sur la base des deuxièmes coordonnées desdits deux points distincts, et pour commander ainsi lesdits moyens d'activation (10), de manière à déplacer ladite tête (32) pour venir au contact dudit objet (2) et dans une position coaxiale.

6. Une unité selon la revendication 5, caractérisée par le fait que lesdits moyens d'activation (10) comprennent des moyens d'actionnement (21) pour faire tourner ladite tête (32) autour de son axe longitudinal (15) parallèle audit axe central (55).

7. Une unité selon la revendication 6, caractérisée par le fait que lesdits points (A, B, C) sont au nombre de trois ; lesdits moyens capteurs (47, 48, 49) comprenant trois capteurs (47, 48, 49) placés sur ladite tête et dans trois positions respectives, l'une d'entre elles étant une position centrale sur ledit axe longitudinal (15) et les deux autres étant des positions latérales alignées entre elles et avec la position centrale le long d'une ligne (L) perpendiculaire audit axe longitudinal (15) et symétriquement par rapport à la position centrale.

8. Une unité selon la revendication 7, caractérisée par le fait que lesdits capteurs (47, 48, 49) sont des photocapteurs.
